# EUROPÄISCHE PATENTSCHRIFT

(11) **EP 3 994 753 B1**
(45) Veröffentlichungstag und Bekanntmachung des Hinweises auf die Patenterteilung: **21.08.2024**
(21) Anmeldenummer: 20731462.6
(22) Anmeldetag: 08.06.2020
(51) Int. Cl.: H01M 8/04014, H01M 8/04111, H01M 8/0432, H01M 8/04746, H01M 8/1018

(54) **BRENNSTOFFZELLENSYSTEM MIT LUFTGEKÜHLTER VERDICHTER/TURBINEN-EINHEIT UND VERFAHREN**
FUEL CELL SYSTEM WITH AIR COOLED COMPRESSOR/TURBINE ASSEMBLY AND PROCESS OF OPERATION
SYTÈME DE PILES À COMBUSTIBLE AVEC UN ENSEMBLE COMPRESSEUR/TURBINE REFRIGÉRÉ PAR DE L'AIR, ET PROCÉDÉ D'OPÉRATION

(30) Priorität: 05.07.2019 DE 102019209958
(43) Veröffentlichungstag der Anmeldung: 11.05.2022
(73) Patentinhaber: Robert Bosch GmbH, 70442 Stuttgart (DE)
(72) Erfinder: ZONDLER, Johannes, 70176 Stuttgart (DE); OTT, Tobias Reinhard, 70563 Stuttgart (DE)
(86) Internationale Anmeldenummer: PCT/EP2020/065817
(87) Internationale Veröffentlichungsnummer: WO 2021/004715

(56) Entgegenhaltungen:
- WO-A1-2019/145065
- DE-A1- 10 006 344
- DE-A1- 102017 211 943
- DE-A1- 102017 217 075

## Beschreibung

Die Erfindung betrifft ein Brennstoffzellensystem mit einer Turbomaschine gemäß dem Oberbegriff des Anspruchs 1.

### Stand der Technik

Ein solches Brennstoffzellensystem ist aus der DE 10 2017 211 943 A1 bekannt. Dieses Brennstoffzellensystem weist eine Turbomaschine mit einer Turbine und einem Luftverdichter auf, der dazu dient einen Luftmassenstrom, der mindestens einer Brennstoffzelle zugeführt wird, zu verdichten. Es ist ein Kühlluftpfad vorgesehen, über den von dem verdichteten Luftmassenstrom ein Kühlluftmassenstrom zur Kühlung der Turbomaschine abgezweigt wird. Es ist eine bedarfsabhängige Regelung für den verdichteten Kühlluftmassenstrom vorgesehen, wobei als Regelgröße der Regelung die Temperatur der Kühlluft an einem Kühlluftaustritt der Turbomaschine dient. Als Stellgröße der Regelung in dem Kühlluftpfad wird ein fluidischer Widerstand in Form eines Ventils verwendet, dessen Durchflusswiderstand sich in Abhängigkeit von der Temperatur der Kühlluft am Kühlluftaustritt verändert, um den verdichteten Kühlluftmassenstrom bedarfsabhängig zu dosieren. Das Ventil wird dabei von einem Steuergerät angesteuert, durch das die Temperatur der Kühlluft am Kühlluftaustritt erfasst wird. Die Regelung des Kühlluftmassenstroms mit dem Steuergerät, der Erfassung der Temperatur und dem durch das Steuergerät angesteuerten Ventil ist aufwendig.

Durch die DE 100 06 344 A1 ist ein Brennstoffzellensystem bekannt, das einen Luftverdichter aufweist, der dazu dient einen Luftmassenstrom, der mindestens einer Brennstoffzelle zugeführt wird, zu verdichten. Der Luftmassenstrom wird dabei einem Druckluftspeicher zugeführt, aus dem auch ein Luftmassenstrom beispielsweise zur Kühlung des Innenraums eines Omnibusses entnommen werden kann.

Durch das nicht vorveröffentlichte Dokument WO 2019/145065 A1 ist ein Brennstoffzellensystem bekannt, das eine Turbomaschine mit einer Turbine und einem Luftverdichter aufweist, der dazu dient einen Luftmassenstrom, der mindestens einer Brennstoffzelle zugeführt wird, zu verdichten. Es ist ein Kühlluftpfad vorgesehen, über den von dem verdichteten Luftmassenstrom ein Kühlluftmassenstrom zur Kühlung der Turbomaschine abgezweigt wird. Es ist eine bedarfsabhängige Regelung für den verdichteten Kühlluftmassenstrom vorgesehen, wobei als Regelgröße der Regelung die Temperatur der Kühlluft an einem Kühlluftaustritt der Turbomaschine dient. Als Stellgröße der Regelung in dem Kühlluftpfad wird ein fluidischer Widerstand in Form eines Ventils verwendet, dessen Durchflusswiderstand sich in Abhängigkeit von der Temperatur der Kühlluft am Kühlluftaustritt verändert, um den verdichteten Kühlluftmassenstrom bedarfsabhängig zu dosieren. Das Ventil wird dabei von einem Steuergerät angesteuert, durch das die Temperatur der Kühlluft am Kühlluftaustritt erfasst wird. Die Regelung des Kühlluftmassenstroms mit dem Steuergerät, der Erfassung der Temperatur und dem durch das Steuergerät angesteuerten Ventil ist aufwendig. Das Ventil kann als Bimetallventil ausgebildet sein.

### Offenbarung der Erfindung

Aufgabe der Erfindung ist es, die Kühlung eines Luftverdichters in einem Brennstoffzellensystem zu verbessern und zu vereinfachen.

Die Aufgabe ist bei einem Brennstoffzellensystem mit den Merkmalen des Anspruchs 1 dadurch gelöst, dass in dem Kühlluftpfad eine Bimetall-Matrix angeordnet ist, die zur Darstellung der Stellgröße der Regelung dient und nebeneinander angeordnete Bimetalle mit unterschiedlichen Wärmeausdehnungskoeffizienten umfasst und dass der Bimetall-Matrix als Regelgröße Kühlluft vom Kühlluftaustritt zugeführt wird. Dadurch ist kein Steuergerät und kein Temperatursensor für die Regelung des Kühlluftmassenstroms erforderlich, so dass diese vereinfacht ist.

Ein bevorzugtes Ausführungsbeispiel des Brennstoffzellensystems ist dadurch gekennzeichnet, dass der fluidische Widerstand so ausgeführt ist, dass stets ein minimaler Kühlluftmassenstrom durch den Kühlluftpfad strömt. Dadurch wird sichergestellt, dass die Kühlluft an der Messstelle am Kühlluftaustritt stets eine für eine innere Temperatur der mit dem Brennstoffzellensystem ausgestatteten elektrischen Maschine repräsentative Kühllufttemperatur erreicht.

Ein weiteres bevorzugtes Ausführungsbeispiel des Brennstoffzellensystems ist dadurch gekennzeichnet, dass der Luftverdichter als elektrischer Turboverdichter ausgeführt ist. Der elektrische Turboverdichter ist, zum Beispiel durch einen Elektromotor, elektrisch angetrieben. Der Turboverdichter umfasst mindestens ein Verdichterlaufrad, das zum Verdichten der Luft in der Luftzuführung der Brennstoffzelle dient. Der Turboverdichter umfasst vorteilhaft des Weiteren mindestens ein Turbinenlaufrad einer Abgasturbine, die dem Luftausgang oder Abgasausgang der Brennstoffzelle zugeordnet ist. Ein derartiger Turboverdichter wird auch als Turbomaschine bezeichnet.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

### Kurze Beschreibung der Zeichnung

Die einzige beiliegende Figur zeigt eine schematische Darstellung eines Brennstoffzellensystems mit einem Luftverdichter, der mit einem von einem verdichteten Luftmassenstrom abgezweigten Kühlluftmassenstrom gekühlt wird.

### Beschreibung der Ausführungsbeispiele

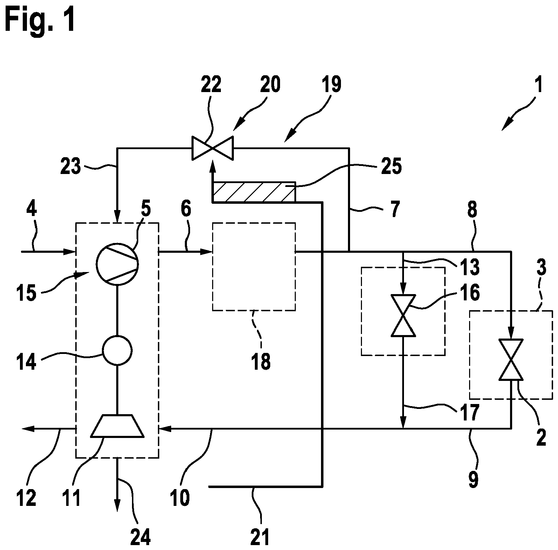

In Figur 1 ist ein Brennstoffzellensystem 1 schematisch dargestellt. Brennstoffzellensysteme an sich sind bekannt, zum Beispiel aus der deutschen Offenlegungsschrift DE 10 2012 224 052 A1. Das Brennstoffzellensystem 1 umfasst eine Brennstoffzelle 3, die nur durch ein gestricheltes Rechteck angedeutet ist. Die Brennstoffzelle 3 umfasst mindestens einen Stack 2, der ersatzweise mit einem Ventilsymbol dargestellt ist.

Durch einen Pfeil 4 ist ein Luftmassenstrom angedeutet, der über einen Luftverdichter 5 der Brennstoffzelle 3 zugeführt wird. Durch einen Pfeil 6 ist ein verdichteter Luftmassenstrom 6 angedeutet, von dem ein Kühlluftmassenstrom 7 abgezweigt wird. Der Kühlluftmassenstrom 7 ist ebenfalls nur durch einen Pfeil angedeutet und ist Teil eines Kühlluftpfades 19, über welchen dem Luftverdichter 5 Kühlluft zugeführt wird.

Die über den Kühlluftpfad 19 zugeführte Kühlluft dient zum Beispiel zur Kühlung von Luftlagern, mit denen eine Welle des Luftverdichters 5 drehbar gelagert ist. Der Kühlluftmassenstrom 7 stellt einen Verlust im verdichteten Luftmassenstrom 6 dar, da der abgezweigte Kühlluftmassenstrom 7 nicht mehr im Stack 2 der Brennstoffzelle 3 verfügbar ist.

Da der Kühlluftmassenstrom 7 über den Luftverdichter 5 zur internen Kühlung bereitgestellt wird, ist Energie, insbesondere elektrische Energie, notwendig, um ihn zu erzeugen. Diese Energie wirkt sich negativ auf den Gesamtwirkungsgrad einer elektrischen Antriebsmaschine eines Kraftfahrzeugs aus, das über das Brennstoffzellensystem 1 angetrieben wird.

Der verbleibende Luftmassenstrom 6 wird über eine Luftzuführleitung 8 der Brennstoffzelle 3 zugeführt. Die Brennstoffzelle 3 ist eine galvanische Zelle, die chemische Reaktionsenergie eines über eine nicht gezeigte Brennstoffzuführungsleitung zugeführten Brennstoffs und eines Oxidationsmittels in elektrische Energie wandelt.

Das Oxidationsmittel ist die Luft, die über die Luftzuführleitung 8 der Brennstoffzelle 3 zugeführt wird. Der Brennstoff kann vorzugsweise Wasserstoff oder Methan oder Methanol sein. Entsprechend entsteht als Abgas Wasserdampf und Kohlendioxid. Das Abgas wird in Form eines Abgasmassenstroms 10 über eine Abgasleitung 9 abgeführt, wie durch einen Pfeil 10 angedeutet ist.

Der Abgasmassenstrom 10 wird über eine Abgasturbine 11 zu einem Abgasaustritt 12 abgeführt, der durch einen Pfeil angedeutet ist. Der Luftverdichter 5 ist in der Luftzuführleitung 8 angeordnet. Die Abgasturbine 11 ist in der Abgasleitung 9 angeordnet. Der Luftverdichter 5 und die Abgasturbine 11 sind über eine Welle mechanisch verbunden.

Die Welle ist durch einen Elektromotor 14 elektrisch antreibbar. Die Abgasturbine 11 dient der Unterstützung des Elektromotors 14 beim Antreiben des Luftverdichters 5. Der Luftverdichter 5, die Abgasturbine 11, die Welle und der Elektromotor 14 bilden zusammen einen Turboverdichter 15, der auch als Turbomaschine bezeichnet wird.

Das Brennstoffzellensystem 1 umfasst des Weiteren eine Bypassleitung 13, in der ein Bypassventil 16 angeordnet ist. Über die Bypassleitung 13 mit dem Bypassventil 16 kann ein Bypassluftmassenstrom 17 zur Druckabsenkung von der Luftzuführleitung 8 unter Umgehung des Stacks 2 der Brennstoffzelle 3 in die Abgasleitung 9 abgeführt werden. Das ist zum Beispiel vorteilhaft, um eine Druckabsenkung in dem über die Luftzuführleitung 8 der Brennstoffzelle 3 zugeführten Luftmassenstrom zu bewirken.

Das Brennstoffzellensystem 1 umfasst des Weiteren einen Zwischenkühler 18, der durch ein gestricheltes Rechteck angedeutet ist. Der Zwischenkühler 18 dient dazu, den verdichteten Luftmassenstrom 6 zu kühlen, bevor der Kühlluftmassenstrom 7 über den Kühlluftpfad 19 abgezweigt wird.

Das Brennstoffzellensystem 1 ist mit einer Regelung 20 ausgestattet, mit welcher der abgezweigte Kühlluftmassenstrom 7 auf den Kühlluftbedarf des Turboverdichters 15 geregelt wird. Durch die Regelung des Kühlluftmassenstroms 7 auf den Bedarf des Turboverdichters 15, der auch als Turbomaschine oder verkürzt als Maschine bezeichnet wird, kann der abgezweigte Kühlluftmassenstrom 7 gering gehalten werden. Dadurch wiederum kann der Wirkungsgrad eines Kraftfahrzeugs, dessen Antriebsmaschine über das Brennstoffzellensystem 1 angetrieben wird, gesteigert werden.

Durch einen Pfeil 21 ist angedeutet, dass als Regelgröße der Regelung 20 die Temperatur der Kühlluft an einem Kühlluftaustritt 24 dient. Der Kühlluftaustritt ist durch einen Pfeil 24 angedeutet. Analog ist der Kühllufteintritt durch einen Pfeil 23 angedeutet.

Dem Kühllufteintritt 23 ist ein fluidischer Widerstand 22 zugeordnet, der zur Darstellung der Regelung 20 mit einer Bimetall-Matrix 25 kombiniert ist, die nur durch ein schraffiertes Rechteck angedeutet ist. Die Bimetall-Matrix 25 dient zur Darstellung der Stellgröße der Regelung 20.

Zur bedarfsabhängigen Dosierung des Kühlluftmassenstroms 7 besteht die Bimetall-Matrix 25 aus mehreren unterschiedlichen nebeneinander angeordneten Bimetallen. Jedes Bimetall besitzt einen anderen Wärmeausdehnungskoeffizient, so dass eine genaue Regelung des Kühlluftmassenstroms 7 erfolgt und nicht unnötig komprimierte oder verdichtete Luft von dem verdichteten Luftmassenstrom 6, der von dem Turboverdichter 15 bereitgestellt wird, abgezweigt wird.

Um sicherzustellen, dass an der Messstelle am Kühlluftaustritt 4 stets eine für die innere Temperatur der Maschine repräsentative Kühllufttemperatur herrscht, muss immer ein minimaler Kühlluftmassenstrom am Kühllufteintritt 23 vorhanden sein. Ein vollständiges Schließen des fluidischen Widerstands 22 muss daher verhindert werden. Dadurch wird sichergestellt, dass die Maschine im Inneren nicht überhitzt, ohne dass sich die Temperatur am Kühlluftaustritt 24 in einem relevanten Maß ändert.

## Patentansprüche

1. Brennstoffzellensystem (1) mit einer Turbomaschine (15) mit einer Turbine (11) und mit einem Luftverdichter (5), der dazu dient, einen Luftmassenstrom (4), der mindestens einer Brennstoffzelle (3) zugeführt wird, zu verdichten, und mit einem Kühlluftpfad (19), über den von dem verdichteten Luftmassenstrom (6) ein Kühlluftmassenstrom (7) zur Kühlung der Turbomaschine abgezweigt wird, wobei eine bedarfsabhängige Regelung (20) für den verdichteten Kühlluftmassenstrom (6) vorgesehen ist, wobei als Regelgröße der Regelung (20) die Temperatur der Kühlluft an einem Kühlluftaustritt (24) der Turbomaschine (15) dient, wobei als Stellgröße der Regelung (20) in dem Kühlluftpfad (19) ein fluidischer Widerstand (22) verwendet wird, dessen Durchflusswiderstand sich in Abhängigkeit von der Temperatur der Kühlluft am Kühlluftaustritt (24) verändert, um den verdichteten Kühlluftmassenstrom bedarfsabhängig zu dosieren, **dadurch gekennzeichnet, dass** in dem Kühlluftpfad (19) eine Bimetall-Matrix (25) angeordnet ist, die zur Darstellung der Stellgröße der Regelung dient und nebeneinander angeordnete Bimetalle mit unterschiedlichen Wärmeausdehnungskoeffizienten umfasst und dass der Bimetall-Matrix (25) als Regelgröße Kühlluft vom Kühlluftaustritt (24) zugeführt wird.

2. Brennstoffzellensystem nach einem der vorhergehenden Ansprüche,
**dadurch gekennzeichnet, dass** der fluidische Widerstand (22) so ausgeführt ist, dass stets ein minimaler Kühlluftmassenstrom durch den Kühlluftpfad (19) strömt.

3. Brennstoffzellensystem nach einem der vorhergehenden Ansprüche,
**dadurch gekennzeichnet, dass** der Luftverdichter (5) als elektrischer Turboverdichter (15) ausgeführt ist.

## Claims

1. Fuel cell system (1) with a turbomachine (15) with a turbine (11) and with an air compressor (5) which serves to compress an air mass flow (4) which is fed to at least one fuel cell (3), and with a cooling air path (19), via which a cooling air mass flow (7) for cooling the turbomachine is branched off from the compressed air mass flow (6), a requirement-dependent control means (20) for the compressed cooling air mass flow (6) being provided, the temperature of the cooling air at a cooling air outlet (24) of the turbomachine (15) serving as control variable of the control means (20), a fluidic resistance (22) being used as actuating variable of the control means (20) in the cooling air path (19), the throughflow resistance of which fluidic resistance (22) changes in a manner which is dependent on the temperature of the cooling air at the cooling air outlet (24), in order to meter the compressed cooling air mass flow in a requirement-dependent manner, **characterized in that** a bimetal matrix (25) is arranged in the cooling air path (19), which bimetal matrix (25) serves to represent the actuating variable of the control means and comprises bimetals arranged next to one another with different coefficients of thermal expansion, and **in that** the bimetal matrix (25) is fed cooling air from the cooling air outlet (24) as control variable.

2. Fuel cell system according to one of the preceding claims, **characterized in that** the fluidic resistance (22) is configured in such a way that a minimum cooling air mass flow always flows through the cooling air path (19).

3. Fuel cell system according to either of the preceding claims, **characterized in that** the air compressor (5) is configured as an electric turbocompressor (15).

## Revendications

1. Système de pile à combustible (1) comprenant une turbomachine (15) avec une turbine (11) et un compresseur d'air (5), qui sert à comprimer un flux massique d'air (4), qui est amené à au moins une pile à combustible (3), et comprenant un chemin (19) d'air de refroidissement, par lequel un flux massique (7) d'air de refroidissement est dérivé du flux massique (6) d'air comprimé pour refroidir la turbomachine, une régulation (20) en fonction des besoins étant prévue pour le flux massique d'air de refroidissement comprimé (6), la température de l'air de refroidissement à une sortie d'air de refroidissement (24) de la turbomachine (15) servant de grandeur de régulation de la régulation (20), une résistance fluidique (22) étant utilisée comme grandeur de réglage de la régulation (20) dans le chemin (19) d'air de refroidissement, résistance dont la résistance à l'écoulement varie en fonction de la température de l'air de refroidissement à la sortie d'air de refroidissement (24), afin de doser le débit massique d'air de refroidissement comprimé en fonction des besoins, **caractérisé en ce que** dans le chemin (19) d'air de refroidissement est disposée une matrice bimétallique (25) qui sert à représenter la grandeur de réglage de la régulation et qui comprend des bi-métaux disposés les uns à côté des autres et ayant des coefficients de dilatation thermique différents, et **en ce que** de l'air de refroidissement provenant de la sortie d'air de refroidissement (24) est amené à la matrice bimétallique (25) en tant que grandeur de régulation.

2. Système de pile à combustible selon l'une des revendications précédentes, **caractérisé en ce que** la résistance fluidique (22) est conçue de telle sorte qu'un débit massique minimal d'air de refroidissement s'écoule toujours à travers le chemin (19) d'air de refroidissement.

3. Système de pile à combustible selon l'une des revendications précédentes, **caractérisé en ce que** le compresseur d'air (5) est conçu sous la forme d'un turbocompresseur électrique (15).
